# EUROPÄISCHE PATENTSCHRIFT

(11) **EP 1 688 181 B1**
(45) Veröffentlichungstag und Bekanntmachung des Hinweises auf die Patenterteilung: **15.07.2015**
(21) Anmeldenummer: 06001381.0
(22) Anmeldetag: 24.01.2006
(51) Int. Cl.: B01L 3/02

(54) **Filterpipettenspitze**
Pipette Tip With Filter
Embout de pipette avec filtre

(30) Priorität: 05.02.2005 DE 102005005437
(43) Veröffentlichungstag der Anmeldung: 09.08.2006
(60) Teilanmeldung: 10011349.7
(73) Patentinhaber: EPPENDORF AG, 22339 Hamburg (DE)
(72) Erfinder: Ziegmann, Christian, 22926 Ahrensburg (DE); Reimann, Thomas, 21502 Geesthacht (DE)
(74) Vertreter: Hauck Patentanwaltspartnerschaft mbB

(56) Entgegenhaltungen:
- EP-A- 1 095 703
- WO-A-00/29112
- WO-A-97/26540
- WO-A-99/06149
- WO-A-99/67647
- WO-A2-02/36708
- DE-A1- 3 635 598
- DE-U1- 9 108 319
- US-A- 5 364 595
- US-A- 6 045 757
- US-A- 6 123 905
- US-A1- 2002 123 156
- US-A1- 2003 099 576
- US-B1- 6 451 260

## Beschreibung

Die Erfindung bezieht sich auf eine Filterpipettenspitze.

Pipettenspitzen werden zusammen mit Pipetten zum Dosieren von Flüssigkeiten verwendet. Pipettenspitzen sind als Röhrchen mit einer verhältnismäßig großen Öffnung am einen Ende zum Verbinden mit einer Pipette, einer verhältnismäßig kleinen Öffnung am anderen Ende für den Durchgang von Flüssigkeit und einem Durchgangskanal zwischen der großen Öffnung und der kleinen Öffnung ausgebildet. Pipetten weisen einen Aufnahmeschaft zum Aufstecken der großen Öffnung oder eine Aufnahme zum Einstecken des einen Endes der Pipettenspitze auf. Ferner haben sie eine Gasverdrängungseinrichtung, die zumeist als Kolben-Zylinder-Einheit ausgeführt ist. Die Gasverdrängungseinrichtung ist über eine Durchgangsöffnung des Aufnahmeschaftes oder der Aufnahme mit der großen Öffnung der lösbar an der Pipette gehaltenen Pipettenspitze verbunden.

Mittels der Gasverdrängungseinrichtung wird eine Luftsäule oder ein andere Gassäule verschoben, um Flüssigkeit in die Pipettenspitze einzusaugen und aus dieser auszustoßen. Wird die Gassäule von der Pipettenspitze weg verschoben, wird eine bestimmte Flüssigkeitsmenge durch die kleine Öffnung in den Durchgangskanal der Pipettenspitze eingesogen. Durch Verschieben der Gassäule zur Pipettenspitze hin wird eine Flüssigkeitsmenge aus dem Durchgangskanal durch die kleine Öffnung abgegeben.

Pipettenspitzen werden meistens nach erfolgter Dosierung gegen frische Pipettenspitzen ausgetauscht, um eine Verunreinigung nachfolgend pipettierter Flüssigkeiten durch Restflüssigkeit zu vermeiden. Pipettenspitzen für den Einmalgebrauch sind meistens aus Kunststoff ausgeführt.

Beim Aufnehmen und Abgeben von Flüssigkeit können feinste Tröpfchen der Flüssigkeit aus der Pipettenspitze in die Pipette gelangen. Bei übermäßiger Gasverdrängung können auch große Mengen der Flüssigkeit durch die große Öffnung in die Pipette eingesogen werden. Diese Flüssigkeit kann bei nachfolgenden Pipettierungen in die Pipettenspitze gelangen. Infolgedessen kann es zur Verunreinigung von Proben kommen.

Zur Vermeidung einer Verunreinigung der Pipette sind bereits Filterpipettenspitzen bekannt. Diese haben einen den Querschnitt des Durchgangskanals ausfüllenden, porösen Filter. Der Filter ist meist in der Nähe der großen Öffnung angeordnet. Er ist z.B. in den Durchgangskanal des Röhrchens eingepreßt bzw. an mindestens einem Vorsprung im Durchgangskanal abgestützt. Der Bereich des Durchgangskanals zwischen Filter und kleiner Öffnung dient der Aufnahme von Flüssigkeit. Der Filter hält Aerosole und Flüssigkeit in der Filterpipettenspitze zurück, so daß sie nicht durch die große Öffnung in die Pipette gelangen. Filter sind z.B. als poröse Stöpsel aus Kunststoff ausgebildet. Sie können durch Sintern kleinster Kunststoffpartikel gebildet sein.

Bekannte Filter haben eine unzureichende Sperrwirkung für Aerosole und Flüssigkeiten. Bekannt sind bereits Filter mit einem Additiv, das bei Flüssigkeitskontakt die Poren des Filters verstopft. Diese Filter sind zwar flüssigkeitsdicht, lassen jedoch Aerosole durch. Das Additiv kann auskrümeln bzw. ausbluten und eine Probe kontaminieren. Außerdem kann die oftmals wertvolle Flüssigkeit bei Kontakt mit dem Filter kontaminiert bzw. schlecht wiedergewonnen werden. Das verstopfte Filter läßt nämlich ein Ausstoßen der Probe nicht zu.

Aus der DE 36 35 598 C2 ist eine Filterpipettenspitze bekannt, bei der der Filter aus mehreren Schichten ausgeführt, die scheibenweise übereinander angeordnet sind und progressive Filterwirkung aufweisen, indem sich die Durchlässigkeit von Scheibe zu Scheibe ändert, insbesondere abnimmt. Gemäß einer Ausgestaltung sind Scheiben verschiedener Dichte übereinandergeschichtet. Durchgehende Medien kommen bei zunehmender Dichte mehrfach mit Wandteilen von Kapillardurchgängen in Berührung. Dieses kann zur Auslösung von Reaktionen ausgenutzt werden, aber an sich auch für eine gesteigerte Filterwirkung, wenn nämlich die Saug- oder Druckkraft eine bestimmte Höhe erreicht oder überschreitet. Somit weist die Filterpipettenspitze einen erhöhten Druckverlust auf, der Dosierungsungenauigkeiten oder Fehlbedienungen zur Folge haben kann. Bei einer Ausführung weist der Filter mehrere Schichten auf, die einen verschieden starken Indikatorzusatz haben, sodass sich die Filterschichten bei Flüssigkeitskontamination verfärben.

Eine Vielzahl Filterpipettenspitzen mit unterschiedlichen Eigenschaften ist bekannt. So werden zur Aufnahme unterschiedlicher Dosiermengen Filterpipettenspitzen mit verschiedenen Abmessungen zur Verfügung gestellt. Außerdem sind Filterpipettenspitzen bekannt, deren Filter bei Kontakt mit Flüssigkeiten in einer bestimmten Weise reagieren, z.B. verstopfen oder ihre Farbe ändern. Ferner sind Filterpipettenspitzen aus unterschiedlichen Materialien und Filterpipettenspitzen mit unterschiedlichen Reinheitsgraden bekannt. Die Unterscheidung der unterschiedlichen Filterpipettenspitzen aufgrund ihres äußeren Erscheinungsbildes ist problematisch.

US-A-6,045,757 beschreibt eine Membran-Filterpipette, bei der Probenflüssigkeiten durch Filter gesaugt werden, um hochmolekulare Substanzen aus flüssigen Proben zu trennen. Hierbei werden auch mehrere Filter verwendet, um verschiedene Stoffe auszufiltern.

WO-A-00/29112 beschreibt eine Pipettenspitze mit einer Membran, die eine Vielzahl Reagenzien zur Detektion bestimmter Inhaltsstoffe an vorbestimmten Positionen aufweist, wobei die Reagenzien Mikropartikel enthalten, die mit einem Fluoreszenzmarker markiert wird. Hierdurch kann die Position sichtbar gemacht werden, auf der ein Inhaltsstoff einer Probe mit einem Reagenz reagiert hat.

WO-A-99/67647 beschreibt eine Testsäule für Flüssigkeiten, die mit einer Vielzahl übereinandergestapelter Membranen gefüllt ist. Jede der Membranen trägt ein anderes Gegenanalyt, das ein spezifisches Analyt aus einer Probe bindet. Die übereinandergestapelten Membranen werden mit Licht bestrahlt, sodass die Stellen, an denen Analyte an Gegenanalyte gebunden sind, Licht emittieren, das mittels eines Photosensors detektiert wird.

US-A-623,905 beschreibt eine Filterpipettenspitze mit einem Filterstopfen, der vor Kontakt mit einer Flüssigkeit oder einem Aerosol eine bestimmte Farbe hat und nach dem Kontakt eine andere Farbe annimmt. Stets sind die Filter vor und nach der Untersuchung insgesamt in der jeweiligen Farbe gefärbt.

US-B-6,451,260 beschreibt eine Filterpipettenspitze, wobei der Fitler einen mikroporösen Halter aufweist, auf dem ein schwammförmiges Polymer angeordnet ist. Bei einem anderen Filterelement soll für den mikroporösen Halter insbesondere Edelstahl oder ein Verbundwerkstoff umfassend Edelstahl und Fasern oder Rahmen aus Glas, Silikondioxid, Kohlenstoff oder Keramik verwendet werden.

Davon ausgehend liegt der Erfindung die Aufgabe zugrunde, Filterpipettenspitzen unterscheidbar zu machen, sodass Verwechslungen mit anderen Filterpipettenspitzen vermieden werden können, sowie die lagerichtige Einbringung des Filters in die Filterpipettenspitzen zu erleichtern.

Diese Aufgabe wird durch eine Filterpipettenspitze mit den Merkmalen jedes der Ansprüche 1 und 2 gelöst. Weitere erfindungsgemäße Aspekte sind die Verwendungen der Ansprüche 30 und 32, sowie die Herstellungsverfahren der Ansprüche 31 und 33.

Gemäß Anspruch 1 hat die Filterpipettenspitze ein Röhrchen mit einer verhältnismäßig großen Öffnung am einen Ende zum Verbinden mit einer Pipette, einer verhältnismäßig kleinen Öffnung am anderen Ende für den Durchgang von Flüssigkeit und einem Durchgangskanal zwischen der großen Öffnung und der kleinen Öffnung, einen im Durchgangskanal angeordneten, einen Abschnitt des Durchgangskanals ausfüllenden, porösen Filter, der mindestens zwei in Richtung des Durchgangskanals hintereinander angeordnete Schichten aufweist und weisen die Schichten unterschiedliche Färbungen auf, dadurch gekennzeichnet, dass die Färbungen der Schichten ausgewählt sind aus den unbunten und den bunten oder den bunten Farben und durch Verwendung gefärbten Kunststoffgranulats bei der Herstellung des Filters erzeugt sind, die Färbungen eine Eigenschaft und/oder Ausrichtung der Filterpipettenspitzen und/oder des Filters kennzeichnen und mittels eines menschlichen Sinnesorgans und/oder eines Sensors feststellbar sind.

Gemäß Anspruch 2 hat die Filterpipettenspitze ein Röhrchen mit einer verhältnismäßig großen Öffnung am einen Ende zum Verbinden mit einer Pipette, einer verhältnismäßig kleinen Öffnung am anderen Ende für den Durchgang von Flüssigkeit und einen Durchgangskanal zwischen der großen Öffnung und der kleinen Öffnung und einen im Durchgangskanal angeordneten, einen Abschnitt des Durchgangskanals ausfüllenden, porösen Filter, der mindestens zwei in Richtung des Durchgangskanals hintereinander angeordnete Schichten umfasst, dadurch gekennzeichnet, dass der Filter mindestens zwei Schichten mit unterschiedlichen fluoreszierenden Additiven aufweist und/oder mindestens eine Schicht mit einem fluoreszierenden Additiv und mindestens eine Schicht ohne fluoreszierendes Additiv aufweist, das mindestens eine fluoreszierende Additiv eine Eigenschaft und/oder Ausrichtung der Filterpipettenspitze und/oder des Filters kennzeichnet und mittels eines menschlichen Sinnesorgans und/oder eines Sensors feststellbar ist.

Der Filter umfasst mindestens zwei in Richtung des Durchgangskanals hintereinander angeordnete Schichten, welche unterschiedliche Markierungen aufweisen oder von denen die eine eine Markierung und die andere keine Markierung aufweist.

Gemäß Anspruch 1 weist der Filter mindestens zwei in Richtung des Durchgangskanals hintereinander angeordnete Schichten mit unterschiedlichen Färbungen auf. Bei dieser Ausgestaltung sind die Markierungen Färbungen von Schichten des Filters.

Die Färbungen des Filters sind sehr gut erkennbar. Dies kann bei der Produktion für die lagerichtige Einbringung des Filters in die Filterpipettenspitze genutzt werden. Bei der fertigen Filterpipettenspitze sind die Färbungen des Filters z.B. durch die Öffnungen des Röhrchens und/oder durch ein zumindest teilweise transparent ausgeführtes Röhrchen hindurch sehr gut erkennbar. Die Färbungen sind sehr viel besser erkennbar, als beispielsweise eine beim Spritzgießen als Profilierung oder durch Aufdrucken auf der Oberfläche des Röhrchens angebrachte Kennzeichnung. Infolgedessen sind die Färbungen eine hervorragende Kennzeichnung der Filterpipettenspitze.

Filterpipettenspitzen mit bestimmten Eigenschaften können bestimmte Färbungen des Filters zugeordnet werden, die eine eindeutige Feststellung ermöglichen, ob es sich um Filterpipettenspitzen mit den betreffenden Eigenschaften handelt. Beispielsweise können Filterpipettenspitzen, die für die Aufnahme unterschiedlicher Dosiermengen bestimmt sind, deren Filter bei Kontakt mit unterschiedlichen Flüssigkeiten in einer bestimmten Weise reagieren, die aus unterschiedlichen Materialien bestehen oder unterschiedliche Reinheitsgrade aufweisen, mit eindeutigen Kennzeichnungen versehen werden. Auch ist es möglich, mit Hilfe der Färbungen des Filters auf einen bestimmten Hersteller hinzuweisen. Die Kennzeichnungen können zur maschinellen Erkennung von Filterpipettenspitzen z.B. bei der Fertigung oder bei der Handhabung im Laborautomaten oder bei der visuellen Erkennung durch Laborpersonal genutzt werden.

Die Färbungen können ausgewählt sein aus sämtlichen bunten Farben (z.B. blau, grün, gelb, rot) und/oder unbunten Farben (schwarz, weiß und Grautöne). Die Färbungen können durch Verwendung gefärbten KunststoffGranulats bei der Herstellung der Filter erzeugt werden. Bevorzugt werden inerte Kunststoffe verwendet, aus denen Farben nicht oder sehr schwer herauslösbar sind. Ferner werden Pigmente bevorzugt, die molekularbiologische Proben nicht verunreinigen.

Gemäß einer weiteren Ausgestaltung ist die näher an der kleinen Öffnung angeordnete Schicht des Filters weiß. Die weiße Farbe signalisiert dem Anwender, dass die Filterpipettenspitze einen inerten Filter aufweist.

Gemäß Anspruch 2 weist der Filter mindestens ein fluoreszierendes Additiv auf. Hierbei ist die Markierung ein fluoreszierendes Additiv. Durch Anregung mittels geeigneter Strahlung (z.B. UV-Strahlung) ist es möglich, das fluoreszierende Additiv zur Fluoreszenz zu bringen. Dies ermöglicht eine Erkennung markierter Filter bzw. Filterspitzen bzw. ihre Ausrichtung, falls das Additiv eine bestimmte Anordnung innerhalb des Filters aufweist. Infolgedessen ist eine Filterpipettenspitze mit bestimmten Eigenschaften bzw. die Ausrichtung eines Filters erkennbar, was zur lagerichtigen Einbringung des Filters in das Röhrchen nutzbar ist. Auch kann durch Erfassung von fluoreszierenden Additiven eine Echtheitsprüfung von Filterpipettenspitzen vorgenommen werden.

Gemäß Anspruch 2 weist der Filter mindestens zwei Schichten mit unterschiedlich fluoreszierenden Additiven auf und/oder weist mindestens eine Schicht mit einem fluoreszierenden Additiv und mindestens eine Schicht ohne fluoreszierendes Additiv auf. Durch die unterschiedlich fluoreszierenden Additive ist der Filter mehrfach markiert. Ferner ermöglicht die Zuordnung von fluoreszierenden Additiven zu einer oder mehreren Schichten des Filters eine Erkennung der Lage des Filters.

Das Röhrchen ist gemäß einer Ausgestaltung in dem den Filter umgebenden Bereich durchsichtig, so daß der Filter von außen sichtbar ist. Gemäß einer bevorzugten Ausgestaltung ist das Röhrchen insgesamt durchsichtig.

Gemäß einer Ausgestaltung hat die Filterpipettenspitze ein Röhrchen mit einer verhältnismäßig großen Öffnung am einen Ende zum Verbinden mit einer Pipette, einer verhältnismäßig kleinen Öffnung am anderen Ende für den Durchgang von Flüssigkeit und einem Durchgangskanal zwischen der großen Öffnung und der kleinen Öffnung und einem im Durchgangskanal angeordneten, einen Abschnitt des Durchgangskanals ausfüllenden, porösen Filter umfassend mindestens zwei in Richtung des Durchgangskanals hintereinander angeordnete Schichten, von denen eine Schicht eine Porengröße von maximal etwa 20 µm und eine andere Schicht eine Porengröße von etwa 20 bis 50 µm aufweist, wobei die beiden Schichten unterschiedliche Porengrößen aufweisen.

Die grobporige Schicht des Filters mit einer Porengröße von etwa 20 bis 50 µm dient der Volumen- und Vorfiltration. Diese Schicht wird nachfolgend auch grobporige Schicht genannt. Die grobporige Schicht bietet einem durchgehenden Fluid eine Vielzahl Hindernisse, an denen Tröpfchen bzw. Partikel hängen bleiben können. Die feinporige Schicht des Filters mit einer Porengröße von maximal etwa 20 µm trennt insbesondere Tröpfchen bzw. Partikel mit die Porengröße übersteigenden Abmessungen ab, die durch die grobporige Schicht hindurch gelangen. Diese Schicht wird nachfolgend auch feinporige Schicht genannt. Auch die adsorptive Filterwirkung auf kleinere Partikel wird in der feinporigen Schicht optimal ausgenutzt. Die Abtrennung ist nahezu vollständig, weil die feinporige Schicht einen Abschnitt des Durchgangskanals ausfüllt und damit den Querschnitt des Durchgangskanals versperrt. Die Sperrwirkung übersteigt die Sperrwirkung herkömmlicher, einschichtiger Filter, bei denen die kleinen und großen Poren über das gesamte Volumen verteilt sind, so daß die kleinen Poren nicht in der Lage sind, feinste Tröpfchen bzw. Partikel vollständig zurückzuhalten. Da der Filter aus einer grobporigen und einer feinporigen Schicht zusammengesetzt ist, kann der Druckverlust dem Druckverlust herkömmlicher, einschichtiger Filter entsprechen, so daß die Dosiergenauigkeit nicht beeinträchtigt wird. Anders als bei dem bekannten mehrschichtigen Filter ist eine erhöhte Saug- oder Druckkraft für das Erreichen der gesteigerten Filterwirkung nicht erforderlich. Die Filterspitze ist insbesondere einsetzbar beim Pipettieren zum Verhindern des Eindringens von Aerosolen oder Biomolekülen (z.B. DNA) in die Pipette oder zum Abtrennen von flüssigen oder festen Partikeln aus einer Flüssigkeit bei der Filtration oder Extraktion.

Die Bestimmung der Porengröße der Schichten der erfindungsgemäßen Filterpipettenspitze erfolgt durch Quecksilberintrusion wie in der DIN 66133 vom Juni 1993 angegeben. Die DIN 66133 kann über den Beuth-Verlag GmbH, Burggrafenstraße 6, 10787 Berlin, bezogen werden. Die Angaben in der DIN 66133 zur Durchführung und Auswertung der Messungen werden durch Bezugnahme in die vorliegende Anmeldung einbezogen. Die Messung der Porengröße erfolgt für die Schichten getrennt nach Zerlegung des Filters (z.B. durch Zerschneiden mittels Skalpell) in seine beiden Schichten oder in Abschnitte davon.

Die Porengrößen der feinporigen Schicht und der grobporigen Schicht sind unterschiedlich, so daß bei einer Porengröße der feinporigen Schicht von 20 µm die Porengröße der grobporigen Schicht mehr als 20 µm beträgt. Bei einer Porengröße der grobporigen Schicht von 20 µm beträgt die Porengröße der feinporigen Schicht unter 20 µm. Gemäß einer Ausgestaltung ist die Porengröße der feinporigen Schicht mindestens 5 µm kleiner als die Porengröße der grobporigen Schicht. Gemäß einer weiteren Ausgestaltung ist sie 10 bis 40 µm kleiner.

Gemäß einer Ausgestaltung hat die feinporige Schicht eine Porengröße von maximal etwa 10 µm. Gemäß einer weiteren Ausgestaltung hat die grobporige Schicht eine Porengröße von etwa 20 bis 40 µm.

Die Erfindung bezieht Filterpipettenspitzen ein, bei denen die feinporige Schicht des Filters näher an der kleinen Öffnung als die grobporige Schicht angeordnet ist. Diese Ausgestaltung kann z.B. sinnvoll sein, um das Eindringen von Verunreinigungen aus einer Pipette in die Pipettenspitze zu vermeiden. Gemäß einer bevorzugten Ausgestaltung ist die feinporige Schicht näher an der großen Öffnung angeordnet als die grobporige Schicht. Diese Ausgestaltung verhindert effektiv die Verunreinigung einer Pipette.

Gemäß einer Ausgestaltung ist die Erstreckung in Richtung des Durchgangskanals der feinporigen Schicht geringer als die Erstreckung der grobporigen Schicht. Durch die verhältnismäßig dicke grobporige Schicht wird eine besonders wirksame Volumen- und Vorfiltration erreicht, die in Kombination mit der Feinfiltration durch die verhältnismäßig dünne feinporige Schicht die Sperrwirkung weiter verbessert. Einbezogen sind auch Filterpipettenspitzen, bei denen die Filter mehr als zwei Schichten aufweisen. Die Filter können z.B. beidseitig einer feinporigen Schicht eine grobporige Schicht aufweisen.

Gemäß einer Ausgestaltung hat die Filterpipettenspitze ein Röhrchen mit einer verhältnismäßig großen Öffnung am einen Ende zum Verbinden mit einer Pipette, einer verhältnismäßig kleinen Öffnung am anderen Ende für den Durchgang von Flüssigkeit und einem Durchgangskanal zwischen der großen Öffnung und der kleinen Öffnung und einen im Durchgangskanal angeordneten, einen Abschnitt des Durchgangskanals ausfüllenden, porösen Filter umfassend mindestens zwei in Richtung des Durchgangskanals hintereinander angeordnete Schichten, die unterschiedlich hydrophil oder unterschiedlich hydrophob sind oder von denen die eine Schicht hydrophil und die andere Schicht hydrophob ist.

Die hydrophile oder hydrophilere Schicht des Filters dient insbesondere der Bindung von Tröpfchen wässriger Flüssigkeiten. Aerosole werden von dieser Schicht bevorzugt angelagert. Ebenso bindet DNA und dgl. Biomoleküle bevorzugt an hydrophilen Oberflächen. Die hydrophobe oder hydrophobere Schicht dient bevorzugt der Anlagerung von Proteinen, die bevorzugt von hydrophoben Schichten gebunden werden. Sie weist darüber hinaus eine flüssigkeitsabweisende Charakteristik auf. Der Filter ist infolgedessen gleichsam als Aerosol- und Biomolekül-Barriere wirksam. Die Filterpipettenspitze weist eine insgesamt verbesserte Sperrwirkung auf.

Gemäß einer Ausgestaltung ist die hydrophile Schicht näher an der großen Öffnung als die hydrophobe Schicht angeordnet. Beim Pipettieren weist die hydrophobe Schicht Tröpfchen wässriger Flüssigkeiten ab und verhindert, dass diese in den Filter eintreten. Trotzdem eingetretene Tröpfchen werden von der hydrophilen Schicht gebunden und an einem Austritt aus der großen Öffnung gehindert. Biomoleküle wie DNA werden von der hydrophilen Schicht abgefangen.

Gemäß einer Ausgestaltung ist die Erstreckung in Richtung des Durchgangskanals der hydrophilen Schicht größer als die Erstreckung der hydrophoben Schicht. Hierdurch werden wässrige Flüssigkeiten besonders effektiv in der Filterpipettenspitze zurückgehalten.

Gemäß einer Ausgestaltung hat die Filterpipettenspitze ein Röhrchen mit einer verhältnismäßig großen Öffnung am einen Ende zum Verbinden mit einer Pipette, einer verhältnismäßig kleinen Öffnung am anderen Ende für den Durchgang von Flüssigkeit und einem Durchgangskanal zwischen der großen Öffnung und der kleinen Öffnung und einem im Durchgangskanal angeordneten, einen Abschnitt des Durchgangskanals ausfüllenden, porösen Filter, der einen Superabsorber enthält.

Der Superabsorber quillt bei Flüssigkeitskontakt auf und dichtet das Filter ab, so daß eingetretene Flüssigkeit nicht hindurchtritt und in eine mit der Filterpipettenspitze gegebenenfalls verbundene Pipette eintritt und diese kontaminiert. Superabsorber haben ein besseres Quellverhalten als die in Filter herkömmlicher Filterpipettenspitzen mit Flüssigkeits-Sperrwirkung eingesetzten Additive auf der Basis von Zellulose ("Zellulosegum"). Mittels Superabsorber wird zwar eine Flüssigkeitsbarriere erreicht. Das Filter bleibt jedoch luftdurchlässig, so daß eine eingesogene Probe verhältnismäßig leicht zurückgewonnen werden kann. Hierzu wird die Pipette wie bei einer üblichen Flüssigkeitsabgabe betätigt, so daß ein an der großen Öffnung anliegender Überdruck die Flüssigkeit aus der Filterpipettenspitze ausstößt.

Superabsorber können große Mengen an Wasser binden, wobei sie stark quellen. Superabsorber sind nicht ohne weiteres in flüssiger Probe lösbar. Diese Fähigkeiten sind typisch für Polymere, die ionische Gruppen enthalten. Die am meisten verbreiteten Superabsorber basieren auf vernetzter Polyacrylsäure. Superabsorber stehen meistens in Form eines Pulvers zur Verfügung, in der Regel mit weißer Farbe. Die Partikelgrößen liegen z.B. im Bereich zwischen einigen 10 µm und einigen 100 µm. Die Firma Degussa AG vermarktet unter der Bezeichnung "Creasorb Produkt Z 1069" einen für den erfindungsgemäßen Einsatz geeigneten Superabsorber. Die Firma BASF vermarktet unter der Bezeichnung "Luquasorb B 1110" einen weiteren für den erfindungsgemäßen Einsatz geeigneten Superabsorber.

Der Superabsorber kann auf verschiedene Weise in den porösen Filter integriert sein. Beispielsweise ist es möglich, den Filter mit mehreren Schichten auszuführen, zwischen denen eine Schicht aus dem Superabsorber angeordnet ist. Gemäß einer bevorzugten Ausgestaltung ist der Superabsorber in Hohlräumen des Filters eingelagert. Der Superabsorber wird in den Hohlräumen im Filter gehalten. Dort kommt er gegebenenfalls direkt in Kontakt mit eindringender Flüssigkeit, so daß er die Hohlräume mehr oder weniger sperrt und einen Flüssigkeitsdurchtritt verhindert.

Gemäß einer Ausgestaltung umfaßt der Filter mindestens zwei in Richtung des Durchgangskanals hintereinander angeordnete Schichten, von denen eine Schicht den Superabsorber enthält.

Die von Superabsorber freie Schicht kann verschiedenen Zwecken dienen. Beispielsweise verbessert sie in der oben beschriebenen Weise den Filtereffekt. Zusätzlich oder stattdessen verhindert sie, daß der Superabsorber ausblutet bzw. auskrümelt und die flüssige Probe kontaminiert. Bei herkömmlichen Filterpipettenspitzen mit selbst abdichtenden Filtern kann das Additiv ausbluten und auskrümeln und Proben kontaminieren, so daß beispielsweise eine PCR inhibiert wird. Bei Flüssigkeitskontakt wird dieses Problem bei herkömmlichen Filterpipettenspitzen noch verstärkt. Die erfindungsgemäße Filterpipettenspitze ermöglicht eine Wiedergewinnung der Probe auch bei leichtem Kontakt mit dem Filter, da die von Superabsorber freie Schicht eine Mitnahme des Superabsorbers durch die Flüssigkeit verhindert. Außerdem kommt die Flüssigkeit erst später mit dem Additiv in Berührung als bei herkömmlichen Filterpipettenspitzen.

Gemäß einer Ausgestaltung ist die den Superabsorber enthaltende Schicht näher an der großen Öffnung als die von Superabsorber freie Schicht angeordnet. Hierdurch wird die flüssige Probe von dem Superabsorber ferngehalten bzw. verhindert die von Superabsorber freie Schicht einen Kontakt der flüssigen Probe mit dem Superabsorber.

Gemäß einer Ausgestaltung ist die den Superabsorber enthaltende Schicht zwischen von Superabsorber freien Schichten angeordnet. Hierdurch kann der Filtereffekt verbessert werden und/oder ein Austreten des Superabsorbers aus beiden Enden des Filters verhindert werden.

Gemäß einer Ausgestaltung weist die von Superabsorber freie Schicht eine Porengröße von maximal etwa 50 µm auf. Diese Schicht verhindert ein Hindurchtreten von Superabsorber, bei dem die Teilchengröße minimal etwa 50 µm beträgt. Gemäß einer weiteren Ausgestaltung weist die von Superabsorber freie Schicht eine Porengröße von maximal etwa 30 µm auf. Diese Schicht verhindert ein Hindurchtreten von Superabsorber, bei denen die Teilchengröße minimal etwa 30 µm beträgt.

Gemäß einer Ausgestaltung enthält der Filter oder die den Superabsorber enthaltende Schicht des Filters etwa 10 bis 30 Gew.-% Superabsorber. Bei diesem Gewichtsanteil zeigt der Superabsorber bereits eine gute Barrierewirkung für Flüssigkeit, wobei dennoch eine Luftdurchlässigkeit erhalten bleiben kann.

Die nachfolgenden Ausgestaltungen betreffen sämtliche vorbeschriebenen Filterpipettenspitzen.

Gemäß einer Ausgestaltung weist mindestens eine Schicht des Filters eine Funktionalisierung auf. Die Funktionalisierung bewirkt beispielsweise eine verstärkte Bindung bestimmter Moleküle an die betreffende Schicht. Die Funktionalisierung wird beispielsweise durch Zusätze entsprechender pulverförmiger Additive bei der Herstellung des Filters bewirkt. Mögliche Funktionalisierungen sind reversed-phase-Materialien wie C 18, Ionenaustauscher, Aktivkohle o.ä.

Gemäß einer weiteren Ausgestaltung weisen verschiedene Schichten des Filters verschiedene Funktionalisierungen auf.

Gemäß einer Ausgestaltung sind die Schichten des Filters lose aufeinandergeschichtet.

Gemäß einer Ausgestaltung sind die Schichten des Filters zu einem einteiligen Filterkörper miteinander verbunden. Der einteilige Filterkörper hat Handhabungsvorteile bei der Herstellung der Filterpipettenspitzen. Ferner werden die Sperrwirkung mindernde Spalten zwischen den verschiedenen Schichten vermieden. Der einteilige Filterkörper weist eine gesteigerte Sperrwirkung bei gleichbleibend gutem Durchflussverhalten auf. Dieser Filter ist z.B. integral gefertigt oder umfaßt zusammengefügte und miteinander verbundene Schichten.

Gemäß einer Ausgestaltung umfaßt der Durchgangskanal zwischen kleiner Öffnung und Filter ein Aufnahmevolumen zum Aufnehmen einer flüssigen Probe und ist der Durchgangskanal zwischen Filter und großer Öffnung ein Kanal zum Verlagern einer Gassäule. Das Aufnahmevolumen hat gemäß einer Ausgestaltung eine definierte Nenngröße, damit der Anwender für eine bestimmte Dosieraufgabe eine geeignete Filterpipettenspitze wählen kann.

Das Röhrchen wird z.B. durch Spritzgießen aus geeignetem Kunststoff (z.B. Polyethylen (PE) oder Polypropylen (PP) hergestellt.

Der Filter wird z.B. gefertigt, indem ein Kunststoffgranulat für die erste Schicht in eine Form eingebracht und komprimiert wird, dann ein Kunststoffgranulat für eine zweite Schicht in die Form eingebracht und komprimiert wird, die Schichtung gesintert und anschließend der Filterkörper aus der Form ausgestoßen wird. Ein Filterkörper, der nur eine einzige Schicht umfaßt, ist herstellbar, indem das Granulat für die einzige Schicht in die Form eingebracht, komprimiert, gesintert und anschließend der Filterkörper ausgestoßen wird. Ein Additiv wird gegebenenfalls vor dem Einbringen in die Form in ein Granulat für eine der Schichten oder in das Granulat für den gesamten Filterkörper eingemischt. Die Kunststoffgranulate für den einschichtigen oder mehrschichtigen Filter sind z.B. aus Polyethylen (PE), insbesondere aus UHMW-PE.

Gemäß Anspruch 26 umfasst ein Filterpipettenspitzensystem mindestens eine Filterpipettenspitze nach einem der Ansprüche 1 bis 25 und eine Filterpipettenspitze mit einem einschichtigen Filter, wobei die Durchflusswiderstände der Filter verschiedener Filterpipettenspitzen übereinstimmen. Bei dem Filterpipettenspitzensystem wird die Dosiergenauigkeit nicht beeinträchtigt, wenn eine Filterpipettenspitze mit einem einschichtigen Filter gegen eine Filterpipettenspitze mit einem mehrschichtigen Filter ausgetauscht wird. Bei Pipetten, die für Filterpipettenspitzen mit einschichtigen Filtern ausgelegt sind, ist ein Übergang auf die Filterpipettenspitzen mit mehrschichtigen Filtern möglich, ohne daß die Dosiergenauigkeit beeinträchtigt wird. Ferner können einschichtige und mehrschichtige Filterpipettenspitzen in beliebiger Abfolge unter Beibehaltung der Pipettiereigenschaften benutzt werden.

Gemäß Anspruch 27 umfasst ein Filterpipettenspitzensystem, insbesondere nach Anspruch 26, mehrere Filterpipettenspitzen nach einem der Ansprüche 1 bis 25, die unterschiedliche Eigenschaften haben, wobei die Filter der Filterpipettenspitzen mit unterschiedlichen Eigenschaften unterschiedliche Markierungen oder Ausrichtungen aufweisen. Dementsprechend sind Filterpipettenspitzen mit unterschiedlichen Eigenschaften anhand der unterschiedlichen Markierungen (z.B. Färbungen) ihrer Filter oder anhand der verschiedenen Ausrichtungen identisch markierter (z.B. gefärbter) Filter unterscheidbar.

Gemäß einer die Unterscheidbarkeit unterstützenden Ausgestaltung weisen die Filter der Filterpipettenspitzen mit unterschiedlichen Eigenschaften unterschiedliche Abmessungen auf.

Gemäß Anspruch 29 umfasst ein Filterpipettiersystem eine Filterpipettenspitze und/oder ein Filterpipettenspitzensystem der vorerwähnten Art und eine Pipette mit mindestens einem Aufnahmeschaft zum Aufstecken der großen Öffnung einer Filterpipettenspitze oder mindestens einer Aufnahme zum Einstecken des Endes mit der großen Öffnung einer Filterpipettenspitze und mindestens einer mit einer Durchgangsöffnung des Aufnahmeschaftes oder der Aufnahme verbundenen Gasverdrängungseinrichtung.

Gemäß Anspruch 30 betrifft die Erfindung die Verwendung einer Filterpipettenspitze der vorerwähnten Art und/oder eines Filterpipettenspitzensystems der vorerwähnten Art und/oder eines Filterpipettiersystems der vorerwähnten Art zum Aufnehmen mindestens einer flüssigen Probe durch die kleine Öffnung in den Durchgangskanal zwischen kleiner Öffnung und Filter durch Anlegen eines reduzierten Gasdruckes an die große Öffnung und zum Abgeben der flüssigen Probe durch die kleine Öffnung durch Anlegen eines erhöhten Gasdruckes an die große Öffnung und zum Sperren des Durchgangskanals zwischen Filter und großer Öffnung gegen den Eintritt von Aerosolen und/oder flüssige Probe mittels des Filters.

Gemäß einer weiteren Ausgestaltung bezieht sich die Verwendung auf das Wiedergewinnen in den Filter eingedrungener flüssiger Probe durch Anlegen eines erhöhten Gasdrucks an die große Öffnung.

Gemäß einer weiteren Ausgestaltung betrifft die Erfindung ein Verfahren der Feststellung der Ausrichtung eines mehrschichtigen Filters für eine Filterpipettenspitze durch Ermittlung der Lage einer Grenze zwischen zwei Schichten durch Einleiten von Ultraschall in den Filter und Messen des aus dem Filter austretenden Ultraschalls. Durch Ultraschalldetektion ist es möglich, die Lage der Grenze zwischen verschiedenen Schichten eines Filters zu unterscheiden, die sich durch ihre Porosität, Dichte oder eine andere physikalische Eigenschaft unterscheiden. Anhand der Lage der Grenze zwischen den Schichten ist die Ausrichtung des Filters feststellbar. Dies kann für die lagerichtige Einbringung des Filters in ein Röhrchen einer Filterpipettenspitze genutzt werden.

Einschlägige Ultraschall-Untersuchungsverfahren sind aus der Werkstoffprüfung zur zerstörungsfreien Prüfung von Werkstücken auf Risse oder andere Fehlstellen bekannt. Diese Verfahren beruhen darauf, daß sich Ultraschallwellen in festen, homogenen Stoffen gradlinig ausbreiten, an Grenzflächen zu Luft oder einem anderen Material aber reflektiert werden. Bei Durchschallungsverfahren wird ein Ultraschallstrahl in das Werkstück eingeführt und auf der Gegenseite dessen Intensität mit einem Schallempfänger gemessen. Beim Reflektionsverfahren mißt man die von einer Fehlstelle im Werkstück reflektierte Schallenergie. Dabei dient der Schallsender gleichzeitig auch als Empfänger der Ultraschall-Impulse. Aus der Laufzeit kann auf die Distanz zwischen Werkstückoberfläche und Fehlstelle geschlossen werden. Diese Prüftechnologie ist erfindungsgemäß für die Feststellung der Grenze zwischen zwei Schichten eines Filters nutzbar.

Erfindungsgemäße Verwendungen einer Filterpipettenspitze sind Gegenstand von Anspruch 30 und 32.

Erfindungsgemäße Herstellungsverfahren einer Filterpipettenspitze sind Gegenstand von Anspruch 31 und 33.

Die Erfindung wird nachfolgend anhand der anliegenden Zeichnung eines Ausführungsbeispiels näher erläutert. In der Zeichnung zeigen:

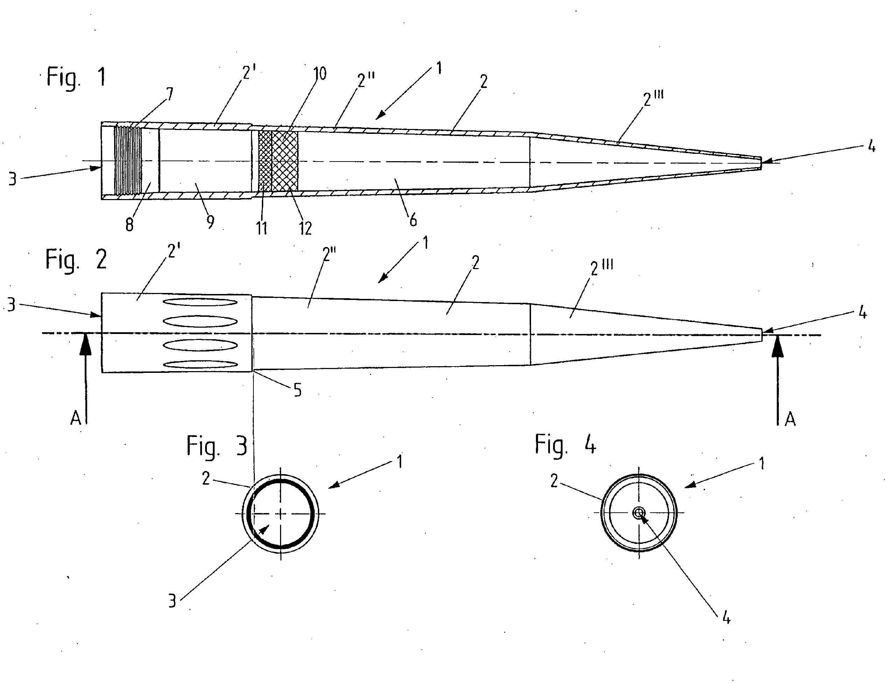

Fig. 1 die Filterpipettenspitze in einem Längsschnitt;
Fig. 2 dieselbe Filterpipettenspitze in einer Seitenansicht;
Fig. 3 dieselbe Filterpipettenspitze in einer Draufsicht;
Fig. 4 dieselbe Filterpipettenspitze in einer Unteransicht.

Die Filterpipettenspitze 1 hat ein Röhrchen 2, daß eine verhältnismäßig große Öffnung 3 an einem Ende und eine verhältnismäßig kleine Öffnung 4 am anderen Ende aufweist. Generell verjüngt sich das Röhrchen 2 von dem Ende mit der großen Öffnung 3 zum Ende mit der kleinen Öffnung 4 hin. Es weist zwischen den Öffnungen 3, 4 Abschnitte 2', 2", 2"' auf, wobei die Abschnitte 2', 2" durch einen Absatz 5 getrennt sind. Außen weisen sie etwa dieselbe Konizität auf. Der Abschnitt 2"' ist hingegen stärker konisch als die vorbezeichneten Abschnitte ausgeführt.

Zwischen der großen Öffnung 2 und der kleinen Öffnung 3 erstreckt sich ein Durchgangskanal 6.

Der Abschnitt 2' hat innen mehrere umlaufende Vorsprünge 7, die den abdichtenden Aufstecken auf den konischen Ansatz einer Pipette dienen. Im Aufsteckbereich 8 ist der Durchgangskanal 6 verhältnismäßig stark konisch ausgeführt. Daran grenzt ein Abschnitt 9 verringerter Konizität an. In den Abschnitten 2" und 2"' entspricht jeweils die Konizität innen der Konizität außen.

In den Durchgangskanal 6 ist angrenzend an den Abschnitt 2' in den Abschnitt 2" ein Filter 10 eingepreßt. Der Filter 10 füllt einen Abschnitt des Durchgangskanals 6 vollständig aus. Der Filter 10 ist einteilig und umfaßt zwei Schichten 11, 12. Die näher an der großen Öffnung 3 angeordnete feinporige Schicht 11 hat eine Porengröße von maximal etwa 20 µm die näher an der Öffnung 4 angeordnete grobporige Schicht 12 hat eine Porengröße von etwa 20 bis 50 µm. Die Porengrößen sind gemessen durch Quecksilberintrusionen gemäß der DIN 66 133 beschriebenen Verfahren nach Zerlegen des Filters 10 in die beiden Schichten, z.B. mittels Skapell. Die beiden Schichten 11, 12 des Filters 10 bestehen aus gesintertem UHMW-PE. Die Schichten 11 und 12 haben eine unterschiedliche Färbung. Vorzugsweise hat die feinporige Schicht 11 eine bunte Farbe oder ist schwarz oder grau und hat die grobporige Schicht 12 die Farbe weiß. Die Färbungen erfolgen durch Einsatz entsprechend gefärbter Granulate bei der Herstellung des Filters 10.

Die Schicht 11 ist hydrophil und die Schicht 12 ist hydrophob. Diese Eigenschaft wird durch Additive eingestellt, die dem Granulat für die Herstellung des Filters 10 zugegeben werden.

Zum Pipettieren wird die Filterpipettenspitze 1 mit einer Pipette verbunden, indem der Aufsteckbereich 8 auf einen Ansatz aufgesteckt wird. Beim Einsaugen von Flüssigkeit in den Durchgang 6 zwischen kleiner Öffnung 4 und Filter 10 werden Aerosole von dem Filter 10 daran gehindert, in die Pipette einzudringen. Dabei wird durch die grobporige Schicht 12 eine Volumen- und Vorfilteration bewirkt. Die feinporige Schicht 11 hält feinste Tröpfchen zurück.

Die Färbungen bzw. Farbkombination des Filters 10 ist codiert, d. h. der Filterpipettenspitze 1 mit bestimmten Eigenschaften ist ein bestimmter Farbcode zugeordnet. Der Anwender kann anhand der Färbung des Filters 10 leicht erkennen, welche Art Filterpipettenspitze 1 er vor sich hat.

Dementsprechend werden andere Filterpipettenspitzen 1 mit Filtern 10 ausgerüstet, die abweichende Farbkombinationen aufweisen.

## Patentansprüche

1. Filterpipettenspitze mit einem Röhrchen (2) mit einer verhältnismäßig großen Öffnung (3) am einen Ende zum Verbinden mit einer Pipette, einer verhältnismäßig kleinen Öffnung (4) am anderen Ende für den Durchgang von Flüssigkeit und einem Durchgangskanal (6) zwischen der großen Öffnung (3) und der kleinen Öffnung (4), einem im Durchgangskanal (6) angeordneten, einen Abschnitt des Durchgangskanals (6) ausfüllenden, porösen Filter (10), der mindestens zwei in Richtung des Durchgangskanals hintereinander angeordnete Schichten aufweist und die Schichten (11, 12) unterschiedliche Färbungen aufweisen, **dadurch gekennzeichnet, dass** die Färbungen der Schichten (11, 12) ausgewählt sind aus den unbunten und den bunten Farben oder den bunten Farben, durch Verwendung gefärbten Kunststoffgranulats bei der Herstellung des Filters (10) erzeugt sind, die Färbungen eine Eigenschaft und/oder Ausrichtung der Filterpipettenspitzen (1) und/oder des Filters (10) kennzeichnen und mittels eines menschlichen Sinnesorgans und/oder eines Sensors feststellbar sind.

2. Filterpipettenspitze mit einem Röhrchen (2) mit einer verhältnismäßig großen Öffnung (3) am einen Ende zum Verbinden mit einer Pipette, einer verhältnismäßig kleinen Öffnung (4) am anderen Ende für den Durchgang von Flüssigkeit und einem Durchgangskanal (6) zwischen der großen Öffnung (3) und der kleinen Öffnung (4) und einem im Durchgangskanal (6) angeordneten, einen Abschnitt des Durchgangskanals (6) ausfüllenden, porösen Filter (10), der mindestens zwei in Richtung des Durchgangskanals (6) hintereinander angeordnete Schichten (11, 12) umfasst, **dadurch gekennzeichnet, dass** der Filter (10) mindestens zwei Schichten mit unterschiedlich fluoreszierenden Additiven aufweist und/oder mindestens eine Schicht mit einem fluoreszierenden Additiv und mindestens eine Schicht ohne fluoreszierendes Additiv aufweist, das mindestens eine fluoreszierende Additiv eine Eigenschaft und/oder Ausrichtung der Filterpipettenspitze (1) und/oder des Filters (10) kennzeichnet und mittels eines menschlichen Sinnesorgans und/oder eines Sensors feststellbar ist.

3. Filterpipettenspitze nach Anspruch 1 und 2.

4. Filterpipettenspitze nach Anspruch 1 oder 3, bei der die Färbung ausgewählt ist aus den unbunten Farben mit Ausnahme von Weiß und aus den bunten Farben.

5. Filterpipettenspitze nach Anspruch 1 oder 3, bei der die der kleinen Öffnung (4) zugewandte Schicht (12) weiß ist.

6. Filterpipettenspitze nach einem der Ansprüche 1 bis 5, bei dem das Röhrchen (2) zumindest in dem den Filter (10) umgebenden Bereich durchsichtig ist.

7. Filterpipettenspitze nach einem der Ansprüche 1 bis 6, bei der der Filter (10) mindestens zwei in Richtung des Durchgangskanal hintereinander angeordnete Schichten (11, 12) umfaßt, von denen eine feinporige Schicht (11) eine Porengröße von maximal etwa 20 µm und eine grobporige Schicht (12) eine Porengröße von etwa 20 bis 50 µm aufweist, wobei die beiden Schichten (11, 12) unterschiedliche Porengrößen aufweisen.

8. Filterpipettenspitze nach Anspruch 7, bei der die feinporige Schicht (11) eine Porengröße von maximal etwa 10 µm und/oder die grobporige Schicht (12) eine Porengröße von etwa 20 bis 40 µm aufweist.

9. Filterpipettenspitze nach Anspruch 7 oder 8, bei der die feinporige Schicht (11) näher an der großen Öffnung (3) angeordnet ist als die grobporige Schicht (12).

10. Filterpipettenspitze nach einem der Ansprüche 7 bis 9, bei der die Erstreckung in Richtung des Durchgangskanals (6) der feinporigen Schicht (11) kleiner ist, als die Erstreckung der grobporigen Schicht (12).

11. Filterpipettenspitze nach einem der Ansprüche 7 bis 10, mit einem Filter umfassend mindestens zwei in Richtung des Durchgangskanals (6) hintereinander angeordnete Schichten (11, 12), die unterschiedlich hydrophil oder unterschiedlich hydrophob sind oder von denen die eine Schicht (12) hydrophil und die andere Schicht (11) hydrophob ist.

12. Filterpipettenspitze nach Anspruch 11, bei der die hydrophile Schicht (11) näher an der großen Öffnung (3) als die hydrophobe Schicht (12) angeordnet ist.

13. Filterpipettenspitze nach Anspruch 10 oder 12, bei der die Erstreckung in Richtung des Durchgangskanals (6) der hydrophilen Schicht kleiner ist, als die Erstreckung der hydrophoben Schicht.

14. Filterpipettenspitze nach einem der Ansprüche 1 bis 13, bei der der Filter einen Superabsorber enthält.

15. Filterpipettenspitze nach Anspruch 4, bei der der Superabsorber in Hohlräumen des Filters eingelagert ist.

16. Filterpipettenspitze nach Anspruch 9 oder 15, bei der der Filter mindestens zwei in Richtung des Durchgangskanals (6) hintereinander angeordnete Schichten (11, 12) umfaßt, von denen eine Schicht (12) den Superabsorber enthält.

17. Filterpipettenspitze nach Anspruch 16, bei der die den Superabsorber enthaltende Schicht (11) näher an der großen Öffnung (3) als die von Superabsorber freie Schicht (12) angeordnet ist.

18. Filterpipettenspitze nach Anspruch 16 oder 17, bei der die von Superabsorber freie Schicht eine Porengröße von maximal etwa 50 µm aufweist.

19. Filterpipettenspitze nach einem der Ansprüche 14 bis 18, bei dem der Filter oder die den Superabsorber enthaltende Schicht des Filters etwa 10 bis 30 Gew.-% Superabsorber enthält.

20. Filterpipettenspitze nach einem der Ansprüche 1 bis 19, bei der mindestens eine Schicht (11, 12) des Filters (10) eine Funktionalisierung aufweist.

21. Filterpipettenspitze nach Anspruch 20, bei der verschiedene Schichten (11, 12) des Filters (10) verschiedene Funktionalisierungen aufweisen.

22. Filterpipettenspitze nach einem der Ansprüche 1 bis 21, bei der die Schichten des Filters lose aufeinandergeschichtet sind.

23. Filterpipettenspitze nach einem der Ansprüche 1 bis 21, bei der die Schichten (11, 12) des Filters (10) zu einem einteiligen Filterkörper miteinander verbunden sind.

24. Filterpipettenspitze nach einem der Ansprüche 1 bis 23, bei der der Filter (10) einen Preßsitz im Durchgangskanal (6) aufweist und/oder an mindestens einem Vorsprung im Durchgangskanal (6) abgestützt ist.

25. Filterpipettenspitze nach einem der Ansprüche 1 bis 24, bei der der Durchgangskanal (6) zwischen kleiner Öffnung (4) und Filter (10) ein Aufnahmevolumen zum Aufnehmen einer flüssigen Probe umfaßt und zwischen Filter (10) und großer Öffnung (3) ein Kanal zum Verlagern einer Gassäule ist.

26. Filterpipettenspitzensystem, umfassend mindestens eine Filterpipettenspitze (1) nach einem der Ansprüche 1 bis 25 und eine Filterpipettenspitze mit einem einschichtigen Filter (10), wobei die Durchflußwiderstände der Filter (10) verschiedener Filterpipettenspitzen (1) übereinstimmen.

27. Filterpipettenspitzensystem, insbesondere nach Anspruch 26, umfassend mehrere Filterpipettenspitzen (1) nach einem der Ansprüche 1 bis 25, die unterschiedliche Eigenschaften haben, wobei die Filter (10) der Filterpipettenspitzen (1) mit unterschiedlichen Eigenschaften unterschiedliche Markierungen oder Ausrichtungen aufweisen.

28. Filterpipettenspitzensystem nach Anspruch 27, bei dem die Filter (10) der Filterpipettenspitzen (1) mit unterschiedlichen Eigenschaften unterschiedliche Abmessungen aufweisen.

29. Filterpipettiersystem mit einer Filterpipettenspitze nach einem der Ansprüche 1 bis 25 und/oder einem Filterpipettenspitzensystem nach einem der Ansprüche 26 bis 28 und mit einer Pipette mit mindestens einem Aufnahmeschaft zum Aufstecken der großen Öffnung (3) einer Filterpipettenspitze (1) oder mindestens einer Aufnahme zum Einstecken des Endes mit der großen Öffnung (3) einer Filterpipettenspitze (1) und mindestens einer mit einer Durchgangsöffnung des Aufnahmeschaftes oder der Aufnahme verbundenen Gasverdrängungseinrichtung.

30. Verwendung einer Filterpipettenspitze mit einem Röhrchen (2) mit einer verhältnismäßig großen Öffnung (3) am einen Ende zum Verbinden mit einer Pipette, einer verhältnismäßig kleinen Öffnung (4) am anderen Ende für den Durchgang von Flüssigkeit und einem Durchgangskanal (6) zwischen der großen Öffnung (3) und der kleinen Öffnung (4), einem im Durchgangskanal (6) angeordneten, einen Abschnitt des Durchgangskanals (6) ausfüllenden, porösen Filter (10), der mindestens zwei in Richtung des Durchgangskanals hintereinander angeordnete Schichten (11, 12) aufweist, die unterschiedliche Färbungen aufweisen, die durch Verwendung gefärbten Kunststoffgranulats bei der Herstellung des Filters erzeugt sind, wobei anhand der Färbungen des Filters die Feststellung getroffen wird, ob es sich um die Pipettenspitze mit einer bestimmten Eigenschaft handelt.

31. Herstellungsverfahren einer Filterpipettenspitze bei dem
• ein Röhrchen (2) mit einer verhältnismäßig großen Öffnung (3) am einen Ende zum Verbinden mit einer Pipette, und einer verhältnismäßig kleinen Öffnung (4) am anderen Ende für den Durchgang von Flüssigkeit und einem Durchgangskanal (6) zwischen der großen Öffnung (3) und der kleinen Öffnung (4), bereit gestellt wird,
• ein einen Abschnitt des Durchgangskanals (6) ausfüllenden, poröser Filter (10) im Durchgangskanal (6) angeordnet wird, wobei der poröse Filter mindestens zwei in Richtung des Durchgangskanals hintereinander angeordnete Schichten aufweist,
die Schichten (11, 12) unterschiedliche Färbungen aufweisen, die durch Verwendung gefärbten Kunststoffgranulats bei der Herstellung des Filters erzeugt sind, welche die die Ausrichtung des Filters erkennbar machen, die für die lagerichtige Einbringung des Filters in die Filterpipettenspitze genutzt wird.

32. Verwendung einer Filterpipettenspitze mit einem Röhrchen (2) mit einer verhältnismäßig großen Öffnung (3) am einen Ende zum Verbinden mit einer Pipette, einer verhältnismäßig kleinen Öffnung (4) am anderen Ende für den Durchgang von Flüssigkeit und einem Durchgangskanal (6) zwischen der großen Öffnung (3) und der kleinen Öffnung (4), einem im Durchgangskanal (6) angeordneten, einen Abschnitt des Durchgangskanals (6) ausfüllenden, porösen Filter (10), der mindestens zwei in Richtung des Durchgangskanals hintereinander angeordnete Schichten (11, 12) mit unterschiedlich fluoreszierenden Additiven aufweist und/oder mindestens eine Schicht mit einem fluoreszierenden Additiv und mindestens eine Schicht ohne fluoreszierendes Additiv aufweist, wobei anhand der Fluoreszenz des Filters bei Anregung mittels geeigneter Strahlung die Feststellung getroffen wird, ob es sich um die Pipettenspitze mit einer bestimmten Eigenschaft handelt.

33. Herstellungsverfahren einer Filterpipettenspitze bei dem
• ein Röhrchen (2) mit einer verhältnismäßig großen Öffnung (3) am einen Ende zum Verbinden mit einer Pipette, und einer verhältnismäßig kleinen Öffnung (4) am anderen Ende für den Durchgang von Flüssigkeit und einem Durchgangskanal (6) zwischen der großen Öffnung (3) und der kleinen Öffnung (4), bereit gestellt wird,
• ein einen Abschnitt des Durchgangskanals (6) ausfüllenden, poröser Filter (10) im Durchgangskanal (6) angeordnet wird, wobei der poröse Filter mindestens zwei in Richtung des Durchgangskanals hintereinander angeordnete Schichten mit unterschiedlich fluoreszierenden Additiven aufweist und/oder mindestens eine Schicht mit einem fluoreszierenden Additiv und mindestens eine Schicht ohne fluoreszierendes Additiv aufweist,
wobei anhand der Fluoreszenz des Filters bei Anregung mittels geeigneter Strahlung die Ausrichtung des Filters erkennbar gemacht wird, die für die lagerichtige Einbringung des Filters in die Filterpipettenspitze genutzt wird.

## Claims

1. Filter pipette tip with a small tube (2) with a relatively large aperture (3) at one end for attaching to a pipette, a relatively small aperture (4) at the other end for the passage of liquid and a through-channel (6) between the large aperture (3) and the small aperture (4) and a porous filter (10) arranged in the through-channel (6) filling up a portion of the through-channel (6) and comprising at least two layers (11, 12) arranged in series in the direction of the through-channel (6) and the layers (11, 12) comprising different colorations, wherein the colorations of the layers (11, 12) are selected from the achromatic and/or the chromatic colours, are produced by using colored plastics granulate during the manufacture of the filter (10), the colorations identify a characteristic and/or orientation of the filter pipette tips (1) and/or the filter (10) and may be determined by means of a human sense organ and/or a sensor.

2. Filter pipette tip with a small tube (2) with a relatively large aperture (3) at one end for attaching to a pipette, a relatively small aperture (4) at the other end for the passage of liquid and a through-channel (6) between the large aperture (3) and the small aperture (4) and a porous filter (10) arranged in the through-channel (6) filling up a portion of the through-channel (6) and comprising at least two layers (11, 12) arranged in series in the direction of the through-channel (6), wherein the filter (10) has at least two layers with different fluorescent additives and/or has at least one layer with a fluorescent additive and at least one layer without a fluorescent additive, wherein the at least one fluorescent additive identify a characteristic and/or orientation of the filter pipette tips (1) and/or the filter (10) and may be determined by means of a human sense organ and/or a sensor.

3. Filter pipette tip according to claim 1 and 2.

4. Filter pipette tip according to claim 1 or 3, in which the coloration is selected from the achromatic colours with the exception of white and from the chromatic colours.

5. Filter pipette tip according to claim 1 or 3, in which the layer (12) facing the small aperture (4) is white.

6. Filter pipette tip according to any one of claims 1 to 5, in which the small tube (2) at least in the region surrounding the filter (10) is transparent.

7. Filter pipette tip according to any one of claims 1 to 6, in which the filter (10) comprises at least two layers (11, 12) arranged in series in the direction of the through-channel (6) of which a fine-pore layer (11) has a pore size of a maximum of approximately 20µm and a coarse-pore layer (12) a pore size of approximately 20 to 50µm, the two layers (11, 12) having different pore sizes.

8. Filter pipette tip according to claim 7, in which the fine-pore layer (11) has a pore size of a maximum of approximately 10µm and/or the coarse-pore layer (12) a pore size of approximately 20 to 40µm.

9. Filter pipette tip according to claim 7 or 8, in which the fine-pore layer (11) is arranged closer to the large aperture (3) than the coarse-pore layer (12).

10. Filter pipette tip according to any one of claims 7 to 9, in which the extension of the fine-pore layer (11) in the direction of the through-channel (6) is smaller than the extension of the coarse-pore layer (12).

11. Filter pipette tip according to any one of claims 7 to 10, with a filter (10) comprising at least two layers (11, 12) arranged in series in the direction of the through-channel (6), which are variably hydrophilic or variably hydrophobic or of which the one layer (12) is hydrophilic and the other layer (11) is hydrophobic.

12. Filter pipette tip according to claim 11, in which the hydrophilic layer (11) is arranged closer to the large aperture (3) than the hydrophobic layer (12).

13. Filter pipette tip according to claim 10 or 12, in which the extension of the hydrophilic layer in the direction of the through-channel (6) is smaller than the extension of the hydrophobic layer.

14. Filter pipette tip according to any one of claims 1 to 13, in which the filter (10) contains a superabsorber.

15. Filter pipette tip according to claim 14, in which the superabsorber is layered in hollow spaces of the filter (10).

16. Filter pipette tip according to claim 9 or 15, in which the filter comprises at least two layers (11, 12) arranged in series in the direction of the through-channel (6), of which one layer (12) contains the superabsorber.

17. Filter pipette tip according to claim 16, in which the layer (11) containing the superabsorber is arranged closer to the large aperture (3) than the layer (12) without superabsorber.

18. Filter pipette tip according to claim 16 or 17, in which the layer without superabsorber has a pore size of a maximum of approximately 50µm.

19. Filter pipette tip according to any one of claims 14 to 18, in which the filter (10) or the layer containing the superabsorber of the filter (10) contains approximately 10 to 30 wt% superabsorber.

20. Filter pipette tip according to any one of claims 1 to 19, in which at least one layer (11, 12) of the filter (10) is functionalised.

21. Filter pipette tip according to claim 20, in which the different layers (11, 12) of the filter (10) are functionalised differently.

22. Filter pipette tip according to any one of claims 1 to 21, in which the layers of the filter are freely layered on top of one another.

23. Filter pipette tip according to any one of claims 1 to 9, in which the layers (11, 12) of the filter (10) are attached to one another as to form a one-piece filter body.

24. Filter pipette tip according to any one of claims 1 to 23, in which the filter (10) has a press fit in the through-channel (6) and/or is supported on at least one projection in the through-channel (6).

25. Filter pipette tip according to any one of claims 1 to 24, in which the through-channel (6) between the small aperture (4) and the filter (10) comprises a receiving volume for receiving a liquid sample and between the filter (10) and the large aperture (3) is a channel for displacing a gas column.

26. Filter pipette tip system comprising at least one filter pipette tip (1) according to any one of claims 1 to 25 and a filter pipette tip with a single layer filter (10), wherein the flow resistances of the filters (10) of different filter pipette tips (1) correspond to one another.

27. Filter pipette tip system in particular according to claim 26, comprising a plurality of filter pipette tips (1) according to any one of claims 1 to 25, which have different characteristics, wherein the filters (10) of the filter pipette tips (1) having different characteristics show different markings or orientations.

28. Filter pipette tip system according to claim 27, in which the filters (10) of the filter pipette tips (1) with different characteristics have different dimensions.

29. Filter pipette system with a filter pipette tip according to any one of claims 1 to 25 and/or a filter pipette tip system according to any one of claims 26 to 28 and with a pipette with at least one receiving shaft for attaching the large aperture (3) of a filter pipette tip (1) or at least one receiver for inserting the end with the large aperture (3) of a filter pipette tip (1) and at least one gas displacement device attached to a through aperture of the receiving shaft or the receiver.

30. Use of a filter pipette tip with a small tube (2) with a relatively large aperture (3) at one end for attaching to a pipette, a relatively small aperture (4) at the other end for the passage of liquid and a through-channel (6) between the large aperture (3) and the small aperture (4) and a porous filter (10) arranged in the through-channel (6) filling up a portion of the through-channel (6) and comprising at least two layers (11, 12) arranged in series in the direction of the through-channel (6) and the layers (11, 12) comprising different colorations, which are produced by using colored plastics granulate during the manufacture of the filter (10), wherein different colorations of the filter (10) are associated with filter pipette tips with specific characteristics.

31. Method for producing a filter pipette tip in that
• a small tube (2) with a relatively large aperture (3) at one end for attaching to a pipette, a relatively small aperture (4) at the other end for the passage of liquid and a through-channel (6) between the large aperture (3) and the small aperture (4) is provided,
• a porous filter (10) is arranged in the through-channel (6) filling up a portion of the through-channel (6), wherein the porous filter (10) comprises at least two layers (11, 12) arranged in series in the direction of the through-channel (6),
the layers (11, 12) comprise different colorations, which are produced by using colored plastics granulate during the manufacture of the filter (10), which identify the orientation of the filter (10) during production in order to insert said filters (10) in the correct position in the filter pipette tip.

32. Use of a filter pipette tip with a small tube (2) with a relatively large aperture (3) at one end for attaching to a pipette, a relatively small aperture (4) at the other end for the passage of liquid and a through-channel (6) between the large aperture (3) and the small aperture (4) and a porous filter (10) arranged in the through-channel (6) filling up a portion of the through-channel (6) and comprising at least two layers (11, 12) with different fluorescent additives arranged in series in the direction of the through-channel (6), and/or comprising one layer with a fluorescent additive and at least one layer without a fluorescent additive, wherein by excitation by means of suitable radiation the fluorescent additive is brought to fluorescence to identify the filter pipette tip with specific characteristics.

33. Method for producing a filter pipette tip in that
• a small tube (2) with a relatively large aperture (3) at one end for attaching to a pipette, a relatively small aperture (4) at the other end for the passage of liquid and a through-channel (6) between the large aperture (3) and the small aperture (4) is provided,
• a porous filter (10) is arranged in the through-channel (6) filling up a portion of the through-channel (6), wherein the porous filter (10) comprises at least two layers (11, 12) with different fluorescent additives arranged in series in the direction of the through-channel (6), and/or comprises one layer with a fluorescent additive and at least one layer without a fluorescent additive,
wherein by excitation by means of suitable radiation the fluorescent additive is brought to fluorescence to identify the orientation of the filter (10) in order to insert said filters (10) in the correct position in the filter pipette tip.

## Revendications

1. Embout de pipette avec filtre avec un petit tube (2) avec une ouverture relativement grande (3) à une extrémité, pour la fixation sur une pipette, une ouverture relativement petite (4) à l'autre extrémité pour le passage de liquide, et un canal de passage (6) entre la grande ouverture (3) et la petite ouverture (4), un filtre poreux (10) agencé dans le canal de passage (6), remplissant une section du canal de passage (6), lequel présente au moins deux couches agencées l'une derrière l'autre dans la direction du canal de passage, et les couches (11, 12) présentant des colorations différentes, **caractérisé en ce que** les colorations des couches (11, 12) sont sélectionnées parmi les couleurs achromatiques et les couleurs chromatiques ou parmi les couleurs chromatiques, réalisées à l'aide d'un granulat en plastique coloré pendant la fabrication du filtre (10), **en ce que** les colorations caractérisent une propriété et/ou une orientation des embouts de pipette avec filtre (1) et/ou du filtre (10) et peuvent être déterminées au moyen d'un organe sensoriel humain et/ou d'un capteur.

2. Embout de pipette avec filtre avec un petit tube (2) avec une ouverture relativement grande (3) à une extrémité, pour la fixation sur une pipette, une ouverture relativement petite (4) à l'autre extrémité pour le passage de liquide, et un canal de passage (6) entre la grande ouverture (3) et la petite ouverture (4), et un filtre poreux (10) agencé dans le canal de passage (6), remplissant une section du canal de passage (6), lequel comporte au moins deux couches (11, 12) agencées l'une derrière l'autre dans la direction du canal de passage (6), **caractérisé en ce que** le filtre (10) présente au moins deux couches avec des additifs à fluorescences différentes et/ou au moins une couche avec additif fluorescent et au moins une couche sans additif fluorescent, où l'au moins un additif fluorescent caractérise une propriété et/ou une orientation de l'embout de pipette avec filtre (1) et/ou du filtre (10) et peut être déterminé au moyen d'un organe sensoriel humain et/ou d'un capteur.

3. Embout de pipette avec filtre selon les revendications 1 et 2.

4. Embout de pipette avec filtre selon la revendication 1 ou 3, dans lequel la coloration est sélectionnée parmi les couleurs achromatiques, à l'exception du blanc, et parmi les couleurs chromatiques.

5. Embout de pipette avec filtre selon la revendication 1 ou 3, dans lequel la couche (12) tournée vers la petite ouverture (4) est blanche.

6. Embout de pipette avec filtre selon l'une des revendications 1 à 5, dans lequel le petit tube (2) est transparent au moins dans la région entourant le filtre (10).

7. Embout de pipette avec filtre selon l'une des revendications 1 à 6, dans lequel le filtre (10) comporte au moins deux couches (11, 12) agencées l'une derrière l'autre dans la direction du canal de passage, parmi lesquelles une couche à pores fins (11) présente une taille de pore maximale d'environ 20 µm et une couche à pores grossiers (12) présente une taille de pore d'environ 20 à 50 µm, les deux couches (11, 12) présentant des tailles de pore différentes.

8. Embout de pipette avec filtre selon la revendication 7, dans lequel la couche à pores fins (11) présente une taille de pore maximale d'environ 10 µm et/ou la couche à pores grossiers (12) présente une taille de pore d'environ 20 à 40 µm.

9. Embout de pipette avec filtre selon la revendication 7 ou 8, dans lequel la couche à pores fins (11) est agencée plus près de la grande ouverture (3) que la couche à pores grossiers (12).

10. Embout de pipette avec filtre selon l'une des revendications 7 à 9, dans lequel l'étendue de la couche à pores fins (11) dans la direction du canal de passage (6) est inférieure à l'étendue de la couche à pores grossiers (12).

11. Embout de pipette avec filtre selon l'une des revendications 7 à 10, avec un filtre comprenant au moins deux couches (11, 12) agencées l'une derrière l'autre dans la direction du canal de passage (6), lesquelles présentent des niveaux hydrophiles ou hydrophobes différents et parmi lesquelles une couche (12) est hydrophile et l'autre couche (11) est hydrophobe.

12. Embout de pipette avec filtre selon la revendication 11, dans lequel la couche hydrophile (11) est agencée plus près de la grande ouverture (3) que la couche hydrophobe (12).

13. Embout de pipette avec filtre selon la revendication 10 ou 12, dans lequel l'étendue de la couche hydrophile dans la direction du canal de passage (6) est inférieure à l'étendue de la couche hydrophobe.

14. Embout de pipette avec filtre selon l'une des revendications 1 à 13, dans lequel le filtre contient un agent superabsorbant.

15. Embout de pipette avec filtre selon la revendication 4, dans lequel l'agent superabsorbant est disposé dans les cavités du filtre.

16. Embout de pipette avec filtre selon la revendication 9 ou 15, dans lequel le filtre comporte au moins deux couches (11, 12) agencées l'une derrière l'autre dans la direction du canal de passage (6), parmi lesquelles une couche (12) contient l'agent superabsorbant.

17. Embout de pipette avec filtre selon la revendication 16, dans lequel la couche (11) contenant l'agent superabsorbant est agencée plus près de la grande ouverture (3) que la couche (12) exempte d'agent superabsorbant.

18. Embout de pipette avec filtre selon la revendication 16 ou 17, dans lequel la couche exempte d'agent superabsorbant présente une taille de pore maximale d'environ 50 µm.

19. Embout de pipette avec filtre selon l'une des revendications 14 à 18, dans lequel le filtre ou la couche du filtre contenant l'agent superabsorbant contient environ 10 à 30% en poids d'agent superabsorbant.

20. Embout de pipette avec filtre selon l'une des revendications 1 à 19, dans lequel l'au moins une couche (11, 12) du filtre (10) présente une fonctionnalisation.

21. Embout de pipette avec filtre selon la revendication 20, dans lequel les différentes couches (11, 12) du filtre (10) présentent des fonctionnalisations différentes.

22. Embout de pipette avec filtre selon l'une des revendications 1 à 21, dans lequel les couches du filtre sont superposées librement.

23. Embout de pipette avec filtre selon l'une des revendications 1 à 21, dans lequel les couches (11, 12) du filtre (10) sont reliées les unes aux autres en un corps de filtre unitaire.

24. Embout de pipette avec filtre selon l'une des revendications 1 à 23, dans lequel le filtre (10) présente un ajustement serré dans le canal de passage (6) et/ou s'appuie sur au moins une saillie dans le canal de passage (6).

25. Embout de pipette avec filtre selon l'une des revendications 1 à 24, dans lequel le canal de passage (6) comporte un volume d'admission entre la petite ouverture (4) et le filtre (10), pour l'admission d'un échantillon liquide, et constitue un canal entre le filtre (10) et la grande ouverture (3), pour le déplacement d'une colonne de gaz.

26. Système d'embouts de pipette avec filtre, comportant au moins un embout de pipette avec filtre (1) selon l'une des revendications 1 à 25 et un embout de pipette avec filtre avec un filtre à une couche (10), dans lequel les résistances d'écoulement des filtres (10) concordent avec différents embouts de pipette avec filtre (1).

27. Système d'embouts de pipette avec filtre, en particulier selon la revendication 26, comportant plusieurs embouts de pipette avec filtre (1) selon l'une des revendications 1 à 25, lesquels présentent des propriétés différentes, les filtres (10) des embouts de pipette avec filtre (1) avec des propriétés différentes présentant des marquages différents ou des orientations différentes.

28. Système d'embouts de pipette avec filtre selon la revendication 27, dans lequel les filtres (10) des embouts de pipette avec filtre (1) avec des propriétés différentes présentent des dimensions différentes.

29. Système de pipetage avec filtre, avec un embout de pipette avec filtre selon l'une des revendications 1 à 25 et/ou avec un système d'embouts de pipette avec filtre selon l'une des revendications 26 à 28, et avec une pipette avec au moins une tige d'admission pour l'emboîtement de la grande ouverture (3) d'un embout de pipette avec filtre (1), ou au moins une admission pour l'insertion de l'extrémité avec la grande ouverture (3) d'un embout de pipette avec filtre (1), et au moins un dispositif de refoulement de gaz relié à une ouverture de passage de la tige d'admission ou de l'admission.

30. Utilisation d'un embout de pipette avec filtre avec un petit tube (2) avec une ouverture relativement grande (3) à une extrémité, pour la fixation sur une pipette, une ouverture relativement petite (4) à l'autre extrémité pour le passage de liquide, et un canal de passage (6) entre la grande ouverture (3) et la petite ouverture (4), un filtre poreux (10) agencé dans le canal de passage (6), remplissant une section du canal de passage (6), lequel présente au moins deux couches (11, 12) agencées l'une derrière l'autre dans la direction du canal de passage, lesquelles présentent des colorations différentes réalisées à l'aide d'un granulat en plastique coloré pendant la fabrication du filtre, dans laquelle les colorations du filtre permettent de déterminer s'il s'agit de l'embout de pipette avec une propriété particulière.

31. Procédé de fabrication d'un embout de pipette avec filtre, dans lequel
• un petit tube (2) avec une ouverture relativement grande (3) à une extrémité pour la fixation sur une pipette, et une ouverture relativement petite (4) à l'autre extrémité pour le passage de liquide, et un canal de passage (6) entre la grande ouverture (3) et la petite ouverture (4), est mis à disposition,
• un filtre poreux (10) remplissant une section du canal de passage (6) est agencé dans le canal de passage (6), le filtre poreux présentant au moins deux couches agencées l'une derrière l'autre dans la direction du canal de passage,
les couches (11, 12) présentent des colorations différentes réalisées à l'aide d'un granulat en plastique coloré pendant la fabrication du filtre, lesquelles permettent de déterminer l'orientation du filtre utilisée pour insérer correctement le filtre dans l'embout de pipette avec filtre.

32. Utilisation d'un embout de pipette avec filtre avec un petit tube (2) avec une ouverture relativement grande (3) à une extrémité, pour la fixation sur une pipette, une ouverture relativement petite (4) à l'autre extrémité pour le passage de liquide, et un canal de passage (6) entre la grande ouverture (3) et la petite ouverture (4), un filtre poreux (10) agencé dans le canal de passage (6), remplissant une section du canal de passage (6), lequel comporte au moins deux couches (11, 12) agencées l'une derrière l'autre dans la direction du canal de passage, avec des additifs à fluorescences différentes, et/ou au moins une couche avec un additif fluorescent et au moins une couche sans additif fluorescent, dans laquelle la fluorescence du filtre permet de déterminer s'il s'agit de l'embout de pipette avec une propriété particulière, lors de l'excitation au moyen d'un rayonnement approprié.

33. Procédé de fabrication d'un embout de pipette avec filtre, dans lequel
• un petit tube (2) avec une ouverture relativement grande (3) à une extrémité pour la fixation sur une pipette, et une ouverture relativement petite (4) à l'autre extrémité pour le passage de liquide, et un canal de passage (6) entre la grande ouverture (3) et la petite ouverture (4), est mis à disposition,
• un filtre poreux (10) remplissant une section du canal de passage (6) est agencé dans le canal de passage (6), le filtre poreux présentant au moins deux couches agencées l'une derrière l'autre dans la direction du canal de passage, avec des additifs à fluorescences différentes, et/ou au moins une couche avec un additif fluorescent et au moins une couche sans additif fluorescent,
dans lequel la fluorescence du filtre permet de déterminer l'orientation du filtre utilisée pour insérer le filtre dans une orientation correcte dans l'embout de pipette avec filtre lors de l'excitation au moyen d'un rayonnement approprié.
